# EUROPEAN PATENT SPECIFICATION

(11) **EP 4 222 454 B1**
(45) Date of publication and mention of the grant of the patent: **22.10.2025**
(21) Application number: 21787488.2
(22) Date of filing: 28.09.2021
(51) Int. Cl.: G01C 21/34, G06Q 10/04, B60L 53/00, B60L 58/10

(54) **DETERMINING CHARGING OF ELECTRIC DELIVERY VEHICLES**
BESTIMMUNG DES LADENS VON ELEKTROFAHRZEUGEN
DÉTERMINATION DE CHARGE DE VÉHICULES DE DISTRIBUTION ÉLECTRIQUES

(30) Priority: 29.09.2020 FI 20205939
(43) Date of publication of application: 09.08.2023
(73) Proprietor: LIIKENNEVIRTA OY / VIRTA LTD, 00180 Helsinki (FI)
(72) Inventor: AHTIKARI, Jussi, 00180 Helsinki (FI)
(74) Representative: Papula Oy
(86) International application number: PCT/FI2021/050635
(87) International publication number: WO 2022/069795

(56) References cited:
- US-A1- 2011 191 186
- US-A1- 2013 261 860
- US-A1- 2018 060 776
- WANG MIAO ET AL: "Mobility-Aware Coordinated Charging for Electric Vehicles in VANET-Enhanced Smart Grid", IEEE JOURNAL ON SELECTED AREAS IN COMMUNICATIONS, IEEE SERVICE CENTER, PISCATAWAY, US, vol. 32, no. 7, 1 July 2014 (2014-07-01), pages 1344 - 1360, XP011556807, ISSN: 0733-8716, [retrieved on 20140818], DOI: 10.1109/JSAC.2014.2332078
- OLLE SUNDSTROM ET AL: "Flexible Charging Optimization for Electric Vehicles Considering Distribution Grid Constraints", IEEE TRANSACTIONS ON SMART GRID, IEEE, USA, vol. 3, no. 1, 1 March 2012 (2012-03-01), pages 26 - 37, XP011422602, ISSN: 1949-3053, DOI: 10.1109/TSG.2011.2168431

## Description

### TECHNICAL FIELD

Various example embodiments generally relate to the field of charging electric devices. In particular, some example embodiments relate to determining the charging of electric delivery vehicles.

### BACKGROUND

Different types of deliveries are growing constantly. People are more and more using different home delivery services instead of, for example, going to a shop to buy things. People order more food home instead of going to a restaurant, etc. There are many different kinds of delivery services: delivery of goods, for example orders from web shops; delivery of food and groceries, for example orders from restaurants or supermarkets; delivery of people, for example taxis, Uber, etc.

At the same time as delivery services are growing, more and more of the delivery vehicles are electric vehicles, EV, and they need to be charged somewhere.

One of the simplest ways to charge an electric delivery vehicle, EDV, is simply to go to a charging station when the battery starts to be empty. However, since charging will easily take at least 20-30 minutes even with a quick charger, charging when a battery is empty might create problems: amongst other things, an EDV cannot go charging for example in the middle of food delivery, because the food will get cold, or a taxi cannot go charging if a client is waiting for a pickup.

US 2013/261860 A1 discloses a collection and delivery support system for displaying travel route to collect and deliver cargo using a mobile terminal attached to e.g. scooter. The system includes a server calculating moments at which cargo are collected and delivered at destinations. If the remaining amount of energy of charge of the scooter is not sufficient to complete the delivery task, a charging plan is determined taking account of charging station locations around the delivery route.

US 2018/060776 A1 discloses a method of selecting a vehicle to perform delivery tasks. The method involves instructing battery electric vehicle to service a request based on a pickup location, a delivery location, vehicle data, and charging station data.

The method performs charging even if the delivery task can be completed without charging, the charging being performed in view of optimizing the readiness of the electric delivery vehicle to take on further delivery tasks.

US 2011/191186 A1 discloses a method and system providing for the means to direct a driver to recharge their Electric Vehicle based on pre-set and dynamic based driving history coupled to opportunistic advertising revenue cost offset, wherein advertising delivered to the Electric Vehicle is targeted based on user profile, behavioral and location data. The method generates opportunistic charging offers based on the electricity price and renewable energy availability.

The document entitled "Mobility-Aware Coordinated Charging for Electric Vehicles in VANET-Enhanced Smart Grid" by Wang Miao et al. (XP011556807, IEEE, July 2014) discloses a mobility aware coordinated charging scheme for electric vehicles allowing to determine an optimal charging strategy to improve the power utilization of the grid and reduce the average EV travel cost while avoiding power system overloading, thereby providing a globally optimal energy utilization of the electricity grid, taking into account the electricity grid load and the electricity cost (e.g. for a fleet of electric buses).

The document entitled "Flexible Charging Optimization for Electric Vehicles Considering Distribution Grid Constraints" by Olle Sundstrom et al. (XP011422602, IEEE, March 2012) discloses a flexible charging optimization scheme for electric vehicles considering distribution grid constraints, including grid load state, wind and solar power availability, and electricity price.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable determination of charging for an EDV having the delivery considered. This and other benefits may be achieved by the features of the independent claims. Further implementation forms are provided in the dependent claims, the description, and the drawings.

According to a first aspect of the present invention, an apparatus is provided according to claim 1. This solution may enable the delivery to be delivered in an optimal way with respect to the electric vehicle, what is being delivered and available energy at the charging station.

According to an implementation form of the first aspect, the plan comprises a location of at least one charging station, wherein the delivery route is configured based on the location of the at least one charging station. This solution may optimize the route also with respect to the location of the charging station.

According to an implementation form of the first aspect, the plan comprises a duration of the charging at the at least one charging station. This solution may enable optimization of the delivery with respect to time and battery state.

According to an implementation form of the first aspect, the plan comprises a point of time of performing the charging. This solution may take into consideration what kind of delivery is being delivered and adapt the timing of charging accordingly.

According to an implementation form of the first aspect, the delivery route of the EDV comprises at least one pickup location, at least one destination location, and a distance of the delivery route for the EDV. This solution may enable determination of physical characteristics of the route.

According to an implementation form of the first aspect, the delivery route of the EDV is determined by a logistics system with respect to the pickup location, destination location and a road network. This solution may enable use of external, or even existing, delivery or navigation routes, and configure a charging operation according to that.

According to an implementation form of the first aspect, the delivery rule comprises contents of what is being delivered, a type of the EDV which is used for the delivery, and a delivery priority. This solution may optimize charging with respect to the characteristics of the delivery.

According to an implementation form of the first aspect, the delivery priority comprises information for delivering: as soon as possible, as soon as the pickup destination is ready, within a promised delivery time, or whenever. This solution may optimize charging with respect to the characteristics of the delivery.

According to the first aspect of the present invention, the input of the available energy comprises an electricity grid load state, an electricity price, and information of the availability of renewable energy. This solution takes into consideration the characteristics of available energy for the charging operation.

According to an implementation form of the first aspect, the plan comprises depot charging instructions configured to depot charge the EDV when it is not doing deliveries but is parked to a depot. This solution may utilize depot charging with respect to the delivery.

According to an implementation form of the first aspect, the plan comprises mandatory charging instructions configured to order, during or in between the deliveries, the EDV to at least one charging station when the EDV cannot finish the current or future delivery routes without charging. This solution takes into consideration mandatory aspects of the battery and the delivery in order to conduct the delivery properly.

According to the first aspect of the present invention, the plan comprises opportunity charging instructions configured to, during or in between the deliveries, instruct the EDV to be charged, even if it does not need extra energy to finish the current or planned delivery routes. This solution takes into consideration the flexibility of the delivery to take advantage of reasonable charging possibilities.

According to a second aspect of the present invention, a method is provided according to claim 11.

According to a third aspect of the present invention, a computer program is provided according to claim 12.

According to a fourth aspect, an apparatus may comprise at least one processor; and at least one memory including computer program code; the at least one memory and the computer program code configured to, with the at least one processor, cause the apparatus at least to perform a method according to any implementation form of the second aspect.

It is appreciated that the implementation forms described above may be used in combination with each other. Several of the implementation forms may be combined to form a further implementation form.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of an electric vehicle charging system, according to an example embodiment;
FIG. 2 illustrates an example of an apparatus configured to practice one or more example embodiments;
FIG. 3 illustrates an example of a charging plan of an electric delivery vehicle, according to an example embodiment;
FIG. 4 illustrates an example of a delivery of an electric delivery vehicle, according to an example embodiment;

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

An electric delivery vehicle, EDV, can be used to deliver various kinds of deliveries from pickup locations to delivery destinations via an optimized delivery route. An apparatus receives a delivery route of the delivery that is configured for the EDV. The delivery route navigates the EDV from the pickup location(s) to delivery destination(s). The apparatus also receives a delivery rule for the delivery. The delivery rule may have data information about the contents and characteristics of the delivery. The apparatus also receives a battery state of the EDV. This may indicate a current status of the battery of the EDV, for example the amount of the charge left on the battery. The apparatus also receives data information of available energy at charging stations. Charging stations where the EDV may be charged provide data information in relation to the charging operation. The apparatus processes the received data information. Based on the delivery route, the delivery rule, the battery state and the data information of the available energy, the apparatus processes and outputs a plan as to when and where to charge the EDV for conducting the delivery.

For example, charging of the EDV may be optimized for the determined delivery route. A plan indicates to the EDV where it is appropriate to be charged, considering various factors in relation to the charging and delivery operations. The plan may also indicate when and for how long the EDV should be charged in relation to the charging and delivery operations.

The charging of EDVs may be divided into three different examples. A depot charging actualizes when the EDV is not doing deliveries but is parked to a depot. Typically, this may take place during the night or non-usage hours of the EDV. A mandatory charging is actualized during, or in between, the deliveries when the EDV cannot finish the current or future delivery route(s) without charging. An opportunity charging may be actualized during, or in between, the deliveries when the EDV is charged even if the EDV does not need extra energy to finish the current or planned delivery routes.

The apparatus is configured to determine what is an optimal time and location to do the mandatory charging. The apparatus is further configured to determine when and where the EDV should do the opportunity charging. The apparatus may be further configured to determine how the EDV should avoid charging at peak hours, when electricity usage should be avoided. Additionally, the apparatus may be configured to determine the optimal locations to install new charging stations, when typical delivery routes and schedules are given.

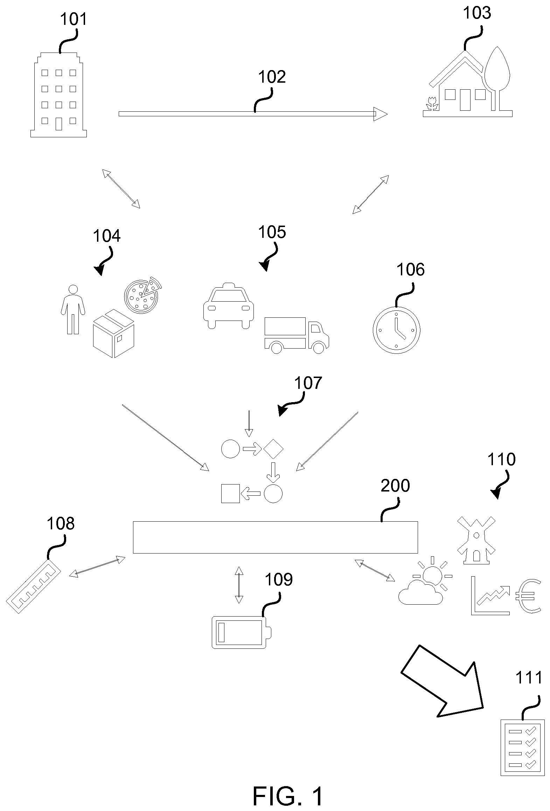

FIG. 1 illustrates an example of an electric vehicle charging system, according to an example embodiment.

A logistics system creates a delivery route 102. In the delivery route 102, deliveries are picked up from one location, a pickup location 101, and delivered to another, a delivery location 103, using the delivery route 102, which is created by the logistics system. The logistics system may be external to the apparatus 200, or alternatively incorporated into the apparatus 200.

Each delivery has delivery rules affecting the delivery. The delivery rules may be inputs for the delivery. The delivery rules comprise contents 104 of the delivery, a vehicle 105 of the delivery and a priority 106 of the delivery. Contents 104 describe what is being delivered, for example people, food, goods, etc. A vehicle 105 illustrates which kind of electric vehicle is used for the delivery. The delivery priority 106, alternatively referred to as deadline, illustrates time attributes affecting the delivery.

There may be different kinds of priorities for deliveries, or delivery priorities 106. For example, the delivery may need to be delivered as soon as possible. Another example is a taxi order or one-hour delivery from a web-shop. The delivery may need to be delivered as soon as the pickup destination 103 is ready. For example, a food delivery from a restaurant needs to be delivered as soon as the restaurant has finished making the food. The delivery may also need to be delivered within a promised delivery time. For example, a grocery shop could promise a delivery for the next day between 18:00 - 21:00, or a web-shop could promise a delivery within 14 days of the order. The delivery may also be actualized whenever the EDV picks the delivery. For example, many shops do not promise any specific delivery time, so the delivery vehicle is free to pick up and deliver the package whenever they want.

The apparatus 200 is configured to determine, by an optimization algorithm 107, the rules and constraints of the delivery. The apparatus 200 receives an additional input from different variables: a delivery distance 108 between the pickup location 101 to a destination 103 via a road network, a battery SoC 109, and an environmental input 110. The environmental input 110 has data information of availability of renewable electricity, such as solar and wind energy, electricity price, electric grid load.

As a result, the apparatus 200 is configured by the optimization algorithm 107 to create a plan 111 on where and when the EDV should be charged for conducting the delivery and considering characteristics of the delivery.

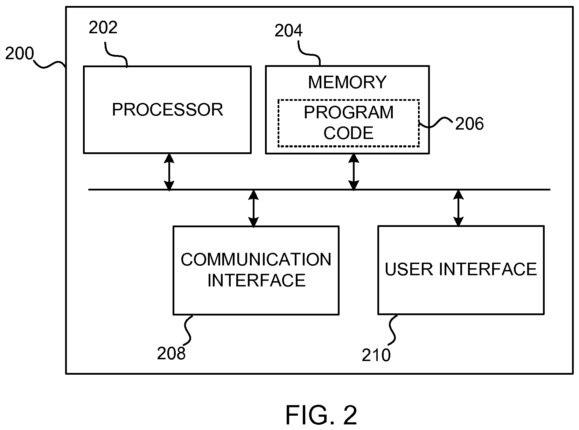

FIG. 2 illustrates an example embodiment of an apparatus 200 configured to practice one or more example embodiments. The apparatus 200 may comprise a computing device such as, for example, a server. Although the apparatus 200 is illustrated as a single device, it is appreciated that, wherever applicable, functions of the apparatus 200 may be distributed to a plurality of devices.

The apparatus 200 may comprise at least one processor 202. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus may further comprise at least one memory 204. The memory may be configured to store, for example, computer program code or the like, for example operating system software and application software. The memory may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 200 may further comprise a communication interface 208 configured to enable the apparatus 200 to transmit and/or receive information to/from other apparatuses. The communication interface 208 may be configured to provide at least one wireless radio connection, such as for example a 3GPP mobile broadband connection (e.g. 3G, 4G, 5G). However, the communication interface may be configured to provide one or more other types of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 208 may comprise, or be configured to be coupled to, at least one antenna to transmit and/or receive radio frequency signals. One or more of the various types of connections may be also implemented as separate communication interfaces, which may be coupled or configured to be coupled to a plurality of antennas. The communication interface may also comprise an internal communication interface within a system, such as for example a data bus.

The apparatus 200 may further comprise a user interface 210 comprising an input device and/or an output device. The input device may take various forms such as a keyboard, a touch screen, or one or more embedded control buttons. The output device may for example comprise a display, a speaker, a vibration motor, or the like.

When the apparatus 200 is configured to implement some functionality, some component and/or components of the apparatus, such as for example the at least one processor and/or the memory, may be configured to implement this functionality. Furthermore, when the at least one processor is configured to implement some functionality, this functionality may be implemented using program code 206 comprised, for example, in the memory 204.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 200 comprises means for performing at least one method described herein. In one example, the means comprise the at least one processor, the at least one memory including program code configured to, when executed by the at least one processor, cause the apparatus to perform the method.

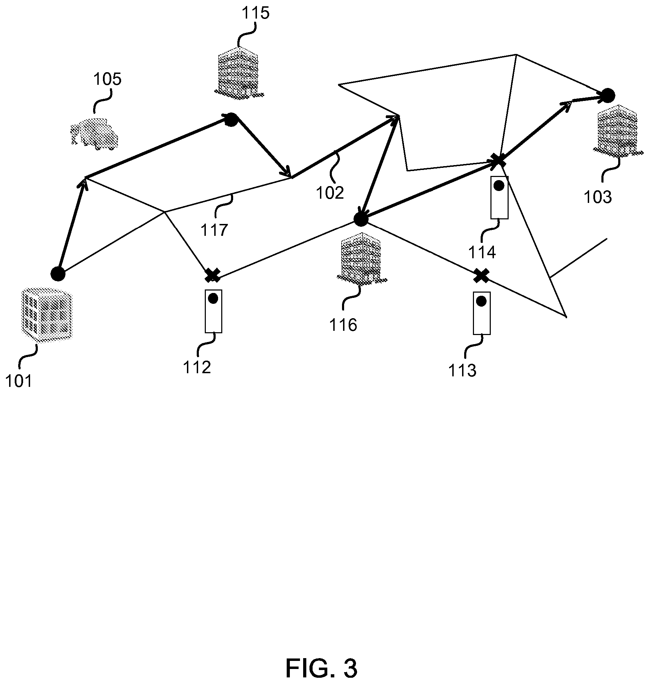

FIG. 3 illustrates an example of a charging plan 111 of an EDV, according to an example embodiment. The EDV has an original planned delivery route from a pickup location 101 to delivery destinations 115, 116 and finally 103. Charging stations 112, 113, and 114 are positioned along a road network 117 of the EDV. The plan 111 indicates that the EDV should stop to charge at charging station 114. The plan 111 may also indicate to ignore charging stations 112 and 113. The plan 111 may be based on the example embodiment of FIG. 1.

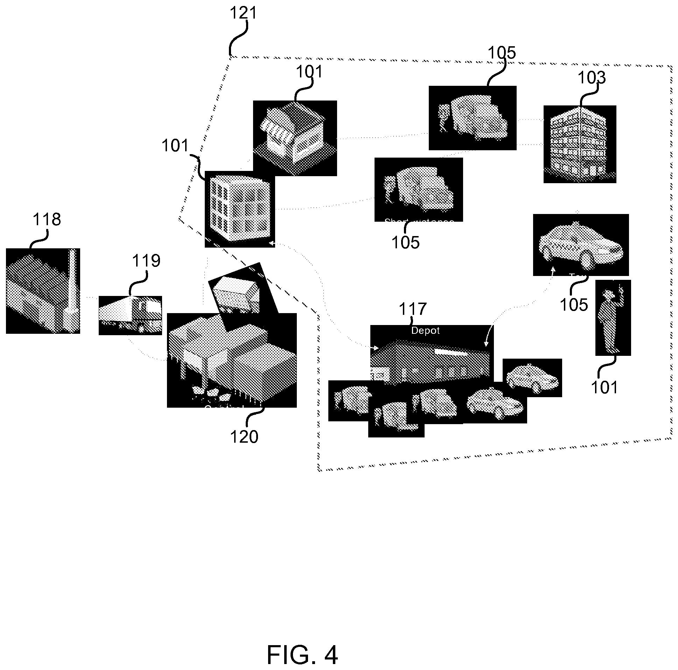

FIG. 4 illustrates an example of a delivery of an EDV, according to an example embodiment. Determination of charging in relation to the delivery may focus on short distance 121 deliveries of goods, food and people. Typically, this happens within a radius of some tens of kilometers. However, depending on the EDV and delivery itself, a longer distance may be applied. A factory 118, a long-distance delivery vehicle 119 and a central distribution center 120 typically provide the delivery to the pickup location 101. According to an embodiment, the EDV may operate as a long-distance delivery vehicle 119. However, typically the EDV operates for a short distance due to battery constrains. EDVs 105 move between different pickup 101 and delivery destinations 103 and often need to be charged at some point during the delivery operations. EDVs may typically go back to a depot 117 during the night, and possibly between deliveries, and may also be charged there.

Further features of the process directly result for example from functionalities of the apparatus 200 and possibly other devices, as described throughout the specification and in the appended claims. Different variations of the process may be also applied, as described in connection with the various example embodiments.

An apparatus 200 may be configured to perform or cause performance of any aspect of the process described herein. Further, a computer program may comprise instructions for causing, when executed, an apparatus to perform any aspect of the process described herein. Further, an apparatus may comprise means for performing any aspect of the process described herein. According to an example embodiment, the means comprises at least one processor, and memory including program code, the at least one processor, and program code configured to, when executed by the at least one processor, cause performance of any aspect of the process.

Any range or device value given herein may be extended or altered without losing the effect sought.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the appended claims which define the scope of the present invention.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item, 'at least one' item, and 'one or more' items may refer to one or more of those items or a plurality of those items.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of the present invention defined by the appended claims.

## Claims

1. An apparatus (200) for determining a charging of an electric delivery vehicle, EDV, (105) configured to deliver a delivery, the apparatus configured to:
receive a delivery route (102) of the delivery configured for the EDV via a road network;
receive a delivery rule of the delivery;
receive a battery state of the EDV; and
receive data information of available energy at charging stations; and
based on the delivery route, the delivery rule, the battery state and the data information of the available energy, process a plan (111) as to when and where to charge the EDV for the delivery, **characterized by** the plan comprises opportunity charging instructions configured to, during or in between the deliveries, instruct the EDV to be charged, even if it does not need extra energy to finish the current or planned delivery routes, and
the data information of available energy at charging stations comprises an electricity grid load state, an electricity price, and information of the availability of renewable energy.

2. The apparatus according to claim 1, wherein the plan comprises:
a location of at least one charging station, wherein the delivery route is configured based on the location of the at least one charging station.

3. The apparatus according to claim 2, wherein the plan comprises:
a duration of the charging at the at least one charging station.

4. The apparatus according to any preceding claim, wherein the plan comprises:
a point of time of performing the charging.

5. The apparatus according to any preceding claim, wherein the delivery route of the EDV comprises at least one pickup location (101), at least one destination location (103), and a distance of the delivery route for the EDV via the road network.

6. The apparatus according to any preceding claim, wherein the delivery route of the EDV is determined by a logistics system with respect to the pickup location, destination location and a road network.

7. The apparatus according to any preceding claim, wherein the delivery rule comprises contents of what is being delivered, a type of the EDV which is used for the delivery, and a delivery priority.

8. The apparatus according to claim 7, wherein the delivery priority comprises information for delivering:
as soon as possible,
as soon as the pickup destination is ready,
within a promised delivery time, or
whenever.

9. The apparatus according to any preceding claim, wherein the plan comprises:
depot charging instructions configured to depot charge the EDV when it is not doing deliveries but is parked to a depot.

10. The apparatus according to any preceding claim, wherein the plan comprises:
mandatory charging instructions configured to order, during or in between the deliveries, the EDV to at least one charging station when the EDV cannot finish the current or future delivery routes without charging.

11. A method for determining a charging of an electric delivery vehicle, EDV, (105) configured to deliver a delivery, comprising:
receiving a delivery route (102) of the delivery configured for the EDV;
receiving a delivery rule of the delivery;
receiving a battery state of the EDV; and
receiving data information of available energy at charging stations; and
based on the delivery route, the delivery rule, the battery state and the data information of the available energy, processing a plan (111) as to when and where to charge the EDV for the delivery, **characterized by** the plan comprises opportunity charging instructions configured to, during or in between the deliveries, instruct the EDV to be charged, even if it does not need extra energy to finish the current or planned delivery routes, and
the data information of available energy at charging stations comprises an electricity grid load state, an electricity price, and information of the availability of renewable energy

12. A computer program comprising program code (206) configured to cause an apparatus (200) to perform the step of processing the method of claim 11.

## Patentansprüche

1. Vorrichtung (200) zum Bestimmen eines Ladens eines Elektro-Lieferfahrzeugs, EDV, (105), das dazu konfiguriert ist, eine Lieferung zu liefern, wobei die Vorrichtung für Folgendes konfiguriert ist:
Empfangen einer Lieferroute (102) der Lieferung, die für das EDV konfiguriert ist, über ein Straßennetz;
Empfangen einer Lieferregel der Lieferung;
Empfangen eines Batteriezustands des EDV; und
Empfangen von Dateninformationen über verfügbare Energie an Ladestationen; und
basierend auf der Lieferroute, der Lieferregel, dem Batteriezustand und den Dateninformationen über die verfügbare Energie, Verarbeiten eines Plans (111), wann und wo das EDV für die Lieferung zu laden ist, **dadurch gekennzeichnet, dass** der Plan Gelegenheitsladeanweisungen umfasst, die dazu konfiguriert sind, während oder zwischen den Lieferungen das EDV anzuweisen, geladen zu werden, selbst wenn es keine zusätzliche Energie benötigt, um die aktuellen oder geplanten Lieferrouten zu beenden, und
die Dateninformationen über verfügbare Energie an Ladestationen einen Stromnetzlastzustand, einen Strompreis und Informationen über die Verfügbarkeit erneuerbarer Energie umfassen.

2. Vorrichtung gemäß Anspruch 1, wobei der Plan Folgendes umfasst:
einen Ort von mindestens einer Ladestation, wobei die Lieferroute basierend auf dem Ort der mindestens einen Ladestation konfiguriert ist.

3. Vorrichtung gemäß Anspruch 2, wobei der Plan Folgendes umfasst:
eine Dauer des Ladens an der mindestens einen Ladestation.

4. Vorrichtung gemäß einem der vorangehenden Ansprüche, wobei der Plan Folgendes umfasst:
einen Zeitpunkt des Durchführens des Ladens.

5. Vorrichtung gemäß einem der vorangehenden Ansprüche, wobei die Lieferroute des EDV mindestens einen Abholort (101), mindestens einen Zielort (103) und eine Entfernung der Lieferroute für das EDV über das Straßennetz umfasst.

6. Vorrichtung gemäß einem der vorangehenden Ansprüche, wobei die Lieferroute des EDV durch ein Logistiksystem in Bezug auf den Abholort, den Zielort und ein Straßennetz bestimmt wird.

7. Vorrichtung gemäß einem der vorangehenden Ansprüche, wobei die Lieferregel Inhalte dessen, was geliefert wird, einen Typ des EDV, der für die Lieferung verwendet wird, und eine Lieferpriorität umfasst.

8. Vorrichtung gemäß Anspruch 7, wobei die Lieferpriorität Informationen umfasst zum Liefern:
so bald wie möglich,
sobald das Abholziel bereit ist,
innerhalb einer versprochenen Lieferzeit, oder
irgendwann.

9. Vorrichtung gemäß einem der vorangehenden Ansprüche, wobei der Plan Folgendes umfasst:
Depot-Ladeanweisungen, die dazu konfiguriert sind, das EDV im Depot zu laden, wenn es keine Lieferungen macht, aber in einem Depot geparkt ist.

10. Vorrichtung gemäß einem der vorangehenden Ansprüche, wobei der Plan Folgendes umfasst:
obligatorische Ladeanweisungen, die dazu konfiguriert sind, während oder zwischen den Lieferungen das EDV zu mindestens einer Ladestation zu bestellen, wenn das EDV die aktuellen oder zukünftigen Lieferrouten nicht ohne Laden beenden kann.

11. Verfahren zum Bestimmen eines Ladens eines Elektro-Lieferfahrzeugs, EDV, (105), das dazu konfiguriert ist, eine Lieferung zu liefern, umfassend:
Empfangen einer Lieferroute (102) der Lieferung, die für das EDV konfiguriert ist;
Empfangen einer Lieferregel der Lieferung;
Empfangen eines Batteriezustands des EDV; und
Empfangen von Dateninformationen über verfügbare Energie an Ladestationen; und
basierend auf der Lieferroute, der Lieferregel, dem Batteriezustand und den Dateninformationen über die verfügbare Energie, Verarbeiten eines Plans (111), wann und wo das EDV für die Lieferung zu laden ist, **dadurch gekennzeichnet, dass** der Plan Gelegenheitsladeanweisungen umfasst, die dazu konfiguriert sind, während oder zwischen den Lieferungen das EDV anzuweisen, geladen zu werden, selbst wenn es keine zusätzliche Energie benötigt, um die aktuellen oder geplanten Lieferrouten zu beenden, und
die Dateninformationen über verfügbare Energie an Ladestationen einen Stromnetzlastzustand, einen Strompreis und Informationen über die Verfügbarkeit erneuerbarer Energie umfassen.

12. Computerprogramm, umfassend Programmcode (206), der dazu konfiguriert ist, eine Vorrichtung (200) zu veranlassen, den Schritt des Verarbeitens des Verfahrens gemäß Anspruch 11 durchzuführen.

## Revendications

1. Appareil (200) pour déterminer une charge d'un véhicule de livraison électrique, EDV, (105) configuré pour livrer une livraison, l'appareil étant configuré pour :
recevoir un itinéraire de livraison (102) de la livraison configuré pour l'EDV via un réseau routier ;
recevoir une règle de livraison de la livraison ;
recevoir un état de batterie de l'EDV ; et
recevoir des informations de données sur l'énergie disponible aux stations de charge ; et
en fonction de l'itinéraire de livraison, de la règle de livraison, de l'état de la batterie et des informations de données de l'énergie disponible, traiter un plan (111) indiquant quand et où charger l'EDV pour la livraison, **caractérisé en ce que** le plan comprend des instructions de charge d'opportunité configurées pour, pendant ou entre les livraisons, donner comme instruction de charger l'EDV, même s'il n'a pas besoin d'énergie supplémentaire pour terminer les itinéraires de livraison actuels ou prévus, et
les informations de données sur l'énergie disponible aux stations de charge comprennent un état de charge du réseau électrique, un prix de l'électricité et des informations sur la disponibilité d'énergie renouvelable.

2. Appareil selon la revendication 1, dans lequel le plan comprend :
un emplacement d'au moins une station de charge, dans lequel l'itinéraire de livraison est configuré sur la base de l'emplacement de la au moins une station de charge.

3. Appareil selon la revendication 2, dans lequel le plan comprend :
une durée de la charge au niveau de la au moins une station de charge.

4. Appareil selon l'une quelconque des revendications précédentes, dans lequel le plan comprend :
un point de temps d'exécution de la charge.

5. Appareil selon l'une quelconque des revendications précédentes, dans lequel l'itinéraire de livraison de l'EDV comprend au moins un emplacement de ramassage (101), au moins un emplacement de destination (103) et une distance de l'itinéraire de livraison pour l'EDV via le réseau routier.

6. Appareil selon l'une quelconque des revendications précédentes, dans lequel l'itinéraire de livraison de l'EDV est déterminé par un système logistique par rapport à l'emplacement de ramassage, à l'emplacement de destination et à un réseau routier.

7. Appareil selon l'une quelconque des revendications précédentes, dans lequel la règle de livraison comprend le contenu de ce qui est livré, un type de l'EDV qui est utilisé pour la livraison et une priorité de livraison.

8. Appareil selon la revendication 7, dans lequel la priorité de livraison comprend des informations pour livrer :
dès que possible,
dès que l'emplacement de ramassage est prêt,
dans un délai de livraison promis, ou
n'importe quand.

9. Appareil selon l'une quelconque des revendications précédentes, dans lequel le plan comprend :
des instructions de charge au dépôt configurées pour charger l'EDV lorsqu'il n'effectue pas de livraisons mais est garé dans un dépôt.

10. Appareil selon l'une quelconque des revendications précédentes, dans lequel le plan comprend :
des instructions de charge obligatoires configurées pour commander, pendant ou entre les livraisons, l'EDV jusqu'au moins une station de charge lorsque l'EDV ne peut pas terminer les itinéraires de livraison actuels ou futurs sans charge.

11. Procédé de détermination d'une charge d'un véhicule de livraison électrique, EDV, (105) configuré pour livrer une livraison, comprenant les étapes consistant à :
recevoir un itinéraire de livraison (102) de la livraison configuré pour l'EDV ;
recevoir une règle de livraison de la livraison ;
recevoir un état de batterie de l'EDV ; et
recevoir des informations de données sur l'énergie disponible aux stations de charge ; et
en fonction de l'itinéraire de livraison, de la règle de livraison, de l'état de la batterie et des informations de données de l'énergie disponible, traiter un plan (111) indiquant quand et où charger l'EDV pour la livraison, **caractérisé en ce que** le plan comprend des instructions de charge d'opportunité configurées pour, pendant ou entre les livraisons, donner comme instruction de charger l'EDV même s'il n'a pas besoin d'énergie supplémentaire pour terminer les itinéraires de livraison actuels ou prévus, et
les informations de données sur l'énergie disponible aux stations de charge comprennent un état de charge du réseau électrique, un prix de l'électricité et des informations sur la disponibilité d'énergie renouvelable.

12. Programme informatique comprenant un code de programme (206) configuré pour amener un appareil (200) à exécuter l'étape de traitement du procédé de la revendication 11.
